# EUROPEAN PATENT SPECIFICATION

(11) **EP 1 718 699 B1**
(45) Date of publication and mention of the grant of the patent: **17.10.2012**
(21) Application number: 04708018.9
(22) Date of filing: 04.02.2004
(51) Int. Cl.: C08L 23/02, C08L 23/08, C08L 23/06

(54) **RESIN COMPOSITION AND MULTI-LAYER ARTICLE THEREOF**
HARZZUSAMMENSETZUNG UND MEHRSCHICHT-GEGENSTAND DARAUS
COMPOSITION DE RÉSINE ET ARTICLE MOULÉ EN RÉSULTANT

(43) Date of publication of application: 08.11.2006
(73) Proprietor: Du Pont-Mitsui Polychemicals Co., Ltd., Tokyo 105-7117 (JP)
(72) Inventor: DEWA, Yasuyuki, Ichihara-shi, Chiba 2990125 (JP); HIRONAKA, Yoshitaka, Ichihara-shi, Chiba 2990126 (JP)
(74) Representative: Benson, John Everett
(86) International application number: PCT/JP2004/001139
(87) International publication number: WO 2005/075556

(56) References cited:
- EP-A- 0 419 274
- US-B1- 6 217 982
- PATENT ABSTRACTS OF JAPAN vol. 2002, no. 05, 3 May 2002 (2002-05-03) -& JP 2002 012722 A (DU PONT MITSUI POLYCHEM CO LTD), 15 January 2002 (2002-01-15) & JP 2002 012722 A (MITSUI DU PONT POLYCHEMICAL) 15 January 2002 (2002-01-15)
- PATENT ABSTRACTS OF JAPAN vol. 1999, no. 02, 26 February 1999 (1999-02-26) -& JP 10 310670 A (DAICEL CHEM IND LTD), 24 November 1998 (1998-11-24) & JP 10 310670 A (DAICEL CHEM IND LTD) 24 November 1998 (1998-11-24)

## Description

The present invention relates to a resin composition that is superior in antistatic properties, processability and compatibility, and single and multi-layer articles thereof.

In general, molded articles produced from polymer materials readily generate static electricity and often collect dust from air while they are handled in storage, transit, and end uses, which result in pollution of the surface of molded articles. In the case that the molded article is a bag for powders and the like, a part of the contained powders sticks to the internal surface of the bag, often defacing the package and impairing the commercial value of the merchandise. To prevent the adhesion of dust and powders, various kinds of antistatic technologies have been proposed and put into practice.

Generally adopted approaches include a method to melt-blendan antistatic agent into the molding resin composition and a method to coat the molded articles with an antistatic agent or an antistatic polymer. Those methods, however, are known to have some drawbacks. For instance, the former method is often accompanied by contamination of the packaged material with bleed out of the migrated antistatic agents or the problem of packaged material with bleed out of the migrated antistatic agents or the problem of time-related deterioration in the antistatic properties. As for the latter method, some defects are pointed out such as poor water resistance of the coated layer, easy damage of the coated layer, increase in surface tackiness resultant from water absorption, etc.

To improve such a drawback, a method to blend potassium ionomer which is a macromolecular antistatic agent is known. For example, Japanese Laid-open Patent Application No. 3-106954 proposed potassium ionomer of two or more kinds of ethylene-unsaturated carboxylic acid copolymers having different unsaturated carboxylic acid contents. And it is clarified that superior antistatic properties are shown when the ionomer is compounded into other thermoplastic resin, specifically such as ethylene-vinyl acetate copolymer and low density polyethylene.

In addition, Japanese Laid-open Patent Application No. 4-93340 proposed an olefin polymer composition having superior antistatic properties, wherein potassium ionomer contained a high potassium ion content is blended with an olefin polymer or a copolymer of olefin and unsaturated ester. Concretely the example that potassium ionomer aforementioned is blended with ethylene-vinyl acetate copolymer or low density polyethylene is shown.

By the way, when potassium ionomer as above-mentioned is blended in polyolefin type resin having high crystallinity, widely used in the field of film and blow molded container, polypropylene, the following drawbacks are often observed. Namely melt torque of an extruder increases and productivity falls in molding processing due to poor dispersibility and compatibility of potassium ionomer, and it is easy to cause bad-appearance of molded articles.

Therefore the object of the present invention is to provide a method to improve processability without impairing physical properties of high crystalline polyolefin type resin and obtain molded articles having a good-appearance when potassium ionomer is blended.

JP-A-2002-012722 relates to ionomer compositions based on an ethylene-(meth)acrylate-maleic monoester as an essential component which serves as a crosslinking site to counteract poor mechanical strength and improve antistatic properties when compounded with a hard polymer component (C).

JP-A-10310670 relates to rubber-modified styrene-based resin compositions.

US-A-6 217 982 relates to calenderable articles of an ethylene-glycidyl (meth)acrylate copolymer.

None of these suggest how to improve upon processability of resin compositions based on a potassium ionomer and high crystalline polyolefin resin without impairing physical properties and appearance whilst also having good antistatic properties.

### Disclosure of the Invention

The present invention relates to a resin composition consisting of 5 to 50 parts by weight of a potassium ionomer (A) of an ethylene-unsaturated carboxylic acid copolymer, 0.5 to 20 parts by weight of a copolymer consisting of ethylene and acrylic or methacrylic acid ester (B) and 94.5 to 30 parts by weight of a polyolefin resin (C) which is a homopolymer of ethylene or a copolymer of ethylene with α-olefin having 3 to 12 carbon atoms which homopolymer or copolymer has a density of 935 kg/m³ or more, and optionally one or more additives selected from antioxidants, light stabilizers, ultraviolet absorbers, pigments, dye stuffs, lubricants, anti-blocking agents, inorganic fillers, foaming agents, foaming promoters and crosslinking agents.

Also provided is a single layer article comprising the resin composition of the invention.

Further provided is a multi-layer article having two or more layers, wherein at least one layer comprises the resin composition of the invention.

### Preferred Embodiments of the Invention

The ethylene-unsaturated carboxylic acid copolymer used as a base polymer of the potassium ionomer (A) of the present invention is produced by copolymerizing ethylene with an unsaturated carboxylic acid and further optionally with another polar monomer.

As unsaturated carboxylic acid, acrylic acid, methacrylic acid, fumaric acid, maleic anhydride, monomethyl maleate, monoethyl maleate, etc. can be exemplified here. Acrylic acid or methacrylic acid is particularly preferable. In addition, as another polar monomer which can optionally be copolymerized, a vinyl ester such as vinyl acetate, vinyl propionate; an unsaturated carboxylic acid ester such as methyl acrylate, ethyl acrylate, isopropyl acrylate, n-butyl acrylate, isobutyl acrylate, n-hexyl acrylate, isooctyl acrylate, methyl methacrylate, ethyl methacrylate, dimethyl maleate, diethyl maleate; carbon monoxide, etc. can be cited. In particular, an unsaturated carboxylic acid ester, especially (meth)acrylic acid ester is a suitable copolymerization component.

The above ethylene-unsaturated carboxylic acid copolymer can be obtained by radical copolymerization of ethylene and unsaturated carboxylic acid with other optional polar monomers under high temperature and high pressure.

In cases where the ethylene-unsaturated carboxylic acid copolymer used as the base polymer of the potassium ionomer has an excessively small acid content or the potassium ionomer has an excessively low degree of neutralization, it is not easy to obtain a resin composition having superior antistatic properties. It is, therefore, preferable to use one type or two or more types of potassium ionomers of ethylene-unsaturated carboxylic acid copolymer, where the unsaturated carboxylic acid content of the base ethylene-unsaturated carboxylic acid is 10 to 30% by weight, and preferably 10 to 20% by weight, and the degree of neutralization with potassium ion is 60% or more (60 to 100%), and preferably 70% or more (70 to 100%) Especially it is desirable to use the mixture of two or more types of potassium ionomers of ethylene-unsaturated carboxylic acid copolymers having different average acid contents.

An example is mixed ionomers, having 60% or more, preferably 70% or more, of neutralization degree by potassium ion, of two or more types of ethylene-unsaturated carboxylic acid copolymers having difference in acid contents between the highest content and the lowest content of 2% by weight or more, preferably 2 to 20% by weight, and having an average acid content of 10 to 30% by weight, preferably 10 to 20% by weight. More specifically, particularly preferred example is mixed ionomers having the aforesaid neutralization degree (60% or more), of the mixed copolymer components that have an average unsaturated carboxylic acid content of 10 to 30% by weight, preferably 10 to 20% by weight, and an average melt flow rate of 1 to 300 g/10 min, more preferably 10 to 200 g/10 min, further preferably 20 to 150 g/10 min, as determined in accordance with JIS K 7210-1999 at a temperature of 190°C and under a load of 2,160 g, wherein the mixed copolymer components comprise an ethylene-unsaturated carboxylic acid copolymer (A-1) having an unsaturated carboxylic acid content of 1 to 10% by weight, preferably 2 to 10% by weight, and a melt flow rate of 1 to 600 g/10 min, preferably 10 to 500 g/10 min, as determined at a temperature of 190°C and under a load of 2,160 g and an ethylene-unsaturated carboxylic acid copolymer (A-2) having an unsaturated carboxylic acid content of 11 to 25% by weight, preferably 13 to 23% by weight, and a melt flow rate of 1 to 600 g/10min., preferably 10 to 500 g/10 min, as determined at a temperature of 190°C and under a load of 2,160 g. It is preferable that the copolymer compositions is prepared by blending A-1 and A-2 in the ratio of 2 to 60 parts by weight, preferably 5 to 50 parts by weight, for A-1, and 98 to 40 parts by weight, preferably 95 to 50 parts by weight, for A-2. In addition, the average melt flow rate mentioned above is a melt flow rate of the melt-blended mixture of A-1 and A-2.

The ethylene-unsaturated carboxylic acid copolymer, as a base polymer of the potassium ionomer, may contain another polar monomer as has already been mentioned. For instance, a multi-component copolymer containing another polar monomer in the range of 40% by weight or less, preferably 30% by weight or less can be used.

It is also preferable to use a potassium ionomer having a melt flow rate of 0.1 to 100 g/10 min, and particularly 0.2 to 50 g/10 min as determined in accordance with JIS K 7210-1999 at a temperature of 190°C and under a load of 2,160g in consideration of its processability and miscibility with other components.

As the component (B) of the resin composition in the present invention, a copolymer consisting of ethylene and acrylic or methacrylic acid ester is used.

Examples of the acrylic or methacrylic acid ester are methyl acrylate, ethyl acrylate, isopropyl acrylate, isobutyl acrylate, n-butyl acrylate, isoctyl acrylate, 2-ethylhexyl acrylate, methyl methacrylate, ethyl methacrylate and isobutyl methacrylate. Preferably, component (B) is an ethylene-methyl acrylate copolymer or an ethylene-ethyl acrylate copolymer.

In the copolymer (B), the (meth)acrylic acid ester content is preferably 5 to 40% by weight, particularly 10 to 35% by weight, and a melt flow rate is preferably 0.1 to 100 g/10 min, particularly 0.2 to 50 g/10 min as determined in accordance with JIS K 7210-1999 at a temperature of 190 °C and under a load of 2,160g to impart sufficient improvements in processability and compatibility.

The polyolefin resin (C) used in the present invention is a homopolymer of ethylene or a copolymer of ethylene with α-olefin having 3 to 12 carbon atoms which homopolymer or copolymer has a density of 935 kg/m³ or more.

The above polyolefin resin (C) is a medium/high density polyethylene.

The medium/high density polyethylene is homopolymer or copolymer of ethylene with α-olefin having 3 or more carbon atoms, has a density of 935 kg/m³ or more, preferably 940 to 970 kg/m³, and can be produced by medium or low pressure method. In addition, in consideration of processability and practical physical properties, it is preferable to use one having a melt flow rate of 0.1 to 100 g/10 min, and particularly 0.2 to 50 g/10 min, as determined in accordance with JIS K 7210-1999 at a temperature of 190 °C and under a load of 2,160 g.

As the α-olefin having 3 or more carbon atoms in the above ethylene copolymer, propylene, 1-butene, 1-pentene, 1-hexene, 1-octene, 1-decene, 1-dodecen and 4-methyl-1-pentene can be cited. Particularly copolymer of α-olefin having around 3 to 12 carbon atoms is preferably used.

The resin composition of the present invention consists of the potassium ionomer (A) of 5 to 50 parts by weight, preferably 10 to 40 part by weight, the copolymer (B) of 0.5 to 20 parts by weight, preferably 1 to 10 part by weight and the polyolefin resin (C) of 30 to 94.5 parts by weight, preferably 40 to 85 parts by weight, based on 100 parts by weight in total of the potassium ionomer (A), the copolymer (B) and the polyolefin resin (C).

The composition also optionally contains one or more additives selected from antioxidants, light stabilisers, ultraviolet absorbers, pigments, dye stuffs, lubricants, anti-blocking agents, inorganic fillers, foaming agents, foaming promoters and crosslinking agents.

When the blend ratio of the potassium ionomer is too small, the composition having superior antistatic properties may become hard to be obtained. In addition, combining the copolymer (B) in the above blend ratio is effective to improve compatibility of (A) and (C). However, when the copolymer (B) is combined too much, further increase in the effect is not expected and it may impair superior properties of (C).

The resin composition of the present invention can be used as various kinds of molded articles. In that case, the resin composition can be used as a single (mono) layer article, or as a multi-layer article with another material. In such a multi-layer article, the resin composition can be used as a foaming promotors, crosslinking agents can be exemplified.

The resin composition of the present invention can be used as various kinds of molded articles. In that case, the resin composition can be used as a single (mono) layer article, or as a multi-layer article with another material. In such a multi-layer article, the resin composition can be used as a surface layer or a middle layer. In a bag or blow molded article, the resin composition can be used not only as an outer surface layer and an inner surface layer, but also as a middle layer. As the layer of the other material that can be used for the above multi-layer article, a layer of a thermoplastic resin (D) other than the resin composition of the present invention can be used. The thermoplastic resin (D) can comprise the ethylene-unsaturated ester copolymer (B) in the resin composition of the present invention or the thermoplastic resin (C).

The layer of the other material may be a recycled resin layer formed from reject products or scrap materials such as trimmed edges produced in manufacturing the multi-layer article, or an adhesive layer. Since the material for such a recycled resin layer is basically equal with materials constituting the multi-layer article or a mixture thereof, and have good compatibility with at least one material of the multi-layer article, it can be expected that the material contribute to improve the adhesiveness between layers. As a material for the above adhesive layer usable as a layer constituting the multi-layer article, any materials which improve interlaminar adhesiveness can be used. As such a material, a hot-melt type adhesive or a coating type adhesive may be cited. It is industrially preferable to use an extrusion type adhesive selected from a thermoplastic resin, a composition thereof with a tackifier, etc.

As the thermoplastic resin (D) as the other material that constitutes the multi-layer article, an olefin polymer selected from a homopolymer of olefin, a copolymer of two or more kinds of olefins and a copolymer of olefin and a polar monomer is preferable. Especially a polyolefin type resin such as polyethylene and polypropylene is most preferable. The thickness ratio of layers of the multi-layer article can be chosen appropriately. For example, the thickness ratio of layer of the resin composition of this invention / layer of other materials can be 0.1 to 1000, preferably 0.5 to 100. In addition, total thickness can vary depending on the purpose of use, and for example, preferred thickness is 10 to 5000 *µ*m, preferably 100 to 3000 *µ*m. The aforementioned multi-layer article can be produced, preferably by laminating each layer using a technique such as extrusion coating, film or sheet coextrusion and coextrusion blow molding. In case the resin composition of the present invention is used as a single layer article, preferred thickness of the article is 10 to 5000 *µ*m, preferably 100 to 3000 *µ*m.

### [Examples]

The present invention is explained in more detail with examples below.

Raw materials and test methods for evaluating physical properties used in the examples and comparative example are as mentioned hereafter.

### 1. Raw materials

(1) IO: Ionomer which is a potassium ionomer, having a neutralization degree of 85% and MFR (measured by JIS K 7210-1999 at 190°C under a load of 2160 kg, same hereunder) of 0.3 g/10 min, of a blend, having an average methacrylic acid content of 16.5% by weight and average MFR of 265 g/10 min, composed of 45 parts by weight of ethylene-methacrylic acid copolymer having methacrylic acid content of 20% by weight and MFR of 500 g/10 min, 27 parts by weight of ethylene-methacrylic acid copolymer having methacrylic acid content of 15% by weight and MFR of 60 g/10 min and 18 parts by weight of ethylene-methacrylic acid copolymer having methacrylic acid content of 10% by weight and MFR of 100 g/10 min
(2) EEA: Ethylene-ethyl acrylate copolymer (ethyl acrylate content: 19% by weight, MFR: 5 g/10 min)
(3) EMA: Ethylene-methyl acrylate copolymer (methyl acrylate content: 16% by weight, MFR: 9 g/10 min)
(4) HDPE: High density polyethylene (Trade name: Hizex 6200B, manufactured by Mitsui Chemicals, Inc., density: 956 kg/m³, MFR: 0.36 g/10 min)
(5) Resin composition

(A) Composition 1: IO/EEA/HDPE=18/2/80 (weight ratio)
(B) Composition 2: IO/EEA/HDPE=9/1/90 (weight ratio)
(C) Composition 3: IO/EMA/HDPE=13.5/1.5/85 (weight ratio)

### 2. Test items and methods for evaluation

Three-layer containers, having inner volume of 100ml and having layer construction, total thickness and thickness ratio shown in Table 1, were formed using a three-layer blow-molding machine. And evaluation on items described below was conducted.

### (1) Electric potential measurement

(a) The surface of three-layer container just after forming was rubbed 10 times by cotton cloth and the electric potential thereof was measured with a static electricity detector (SV-511, of Japan Static Co., Ltd.).
(b) The three-layer container was kept at 40°C and 80% relative humidity atmosphere for 24 hours, and then after rubbing 10 times the surface of the container by cotton cloth, the electric potential on the surface was measured with the static electricity detector (SV-511, of Japan Static Co., Ltd.).

### (2) Adhesion of shavings of dried bonito

(a) After the surface of three-layer container just after forming was rubbed 10 times with cotton cloth, shavings of dried bonito were brought near the surface and their adhesion state was observed.
(b) After the three-layer container was kept at 40°C and 80% relative humidity for 24 hours, the surface was rubbed 10 times with cotton cloth, shavings of dried bonito were brought near the surface and their adhesion state was observed.

A:not adhered at all
B:adhered to some extent
C:adhered in plenty

### (3)Processability

Processability was evaluated with a ratio of load when the compositions 1 to 3 were extruded with a 30mm*φ* extruder equipped with the three-layer blow-molding machine against to the permissible upper limit of load of the extruder.
a:less than 30%
b:30% or more

### (Examples 1-5, Comparative Example 1)

Three layer containers having inner volume of 100ml and having layer construction, total thickness and thickness ratio shown in Table 1, were formed using a three-layer blow-molding machine. And evaluation results of antistatic propeties and processability are shown in Table 1.

**Table 1**

| | | | Example 1 | Example 2 | Example 3 | Example 4 | Example 5 | Comparative Example 1 |
|---|---|---|---|---|---|---|---|---|
| Layer construction | | Outer layer | Composition 1 | HDPE | HDPE | HDPE | Composition 3 | HDPE |
| | | Middle layer | HDPE | Composition 1 | HDPE | HDPE | HDPE | HDPE |
| | | Inner layer | HDPE | HDPE | Composition 1 | Composition. 2 | HDPE | HDPE |
| Total thickness of 3 layers mm | | | 1.1 | 1.1 | 1.1 | 1.1 | 1.1 | 1.1 |
| Thickmess ratio (Outer layer:Middle layer :Inner layer) | | | 1:1:4 | 1:1:1 | 1:2:3 | 1:2:3 | 1:1:8 | 1:1:1 |
| Electric potential | | | | | | | | |
| | Just after forming | | 1 | 25 | 1 | 3 | - | - |
| | After kept at 40°C x 80%RH | | 0 | 5 | 0 | 3 | - | - |
| Adhesion of shavings of dried bonito | | | | | | | | |
| | Just after forming | | A | C | A | B | C | C |
| | After kept at 40°C x 80%RH | | A | B | A | A | A | C |
| Processability | | | a | a | a | a | a | a |

### Industrial Applicability

The present invention can provide a resin composition superior in anti-static properties, proccesability and compatibility. The resin composition can be used singly, e.g. as single layer article, or as multi-layer article with another material, for example, as film, tape, sheet, tube, pipe, bag, container such as blow-molded container, rod, various injection-molded articles, various blow-molded articles, etc. Especially the resin composition is useful for a packaging material. A bag or multi-layer container having an outer layer comprising the resin composition of the present invention is superior in anti-dust properties. A bag or multi-layer container having an inner layer comprising the resin composition of the present invention can be used as a packaging material having an excellent heat sealability and resistance to static adhesion. Among them the bag or multi-layer container having an outer layer comprising the resin composition of the present invention can be formed into a bottle superior in visual properties having a low surface reflection gloss and silky appearance having high haze as well as superior in anti-dust properties.

In addition, the multi-layer article as described above can be used for applications such as electric and electronic materials including an adhesive tape or film for semiconductor such as dicing tape substrate, a back grind film, a marking film, IC carrier tape and tape for taping electronic parts; food packaging materials; hygiene materials; protection films (for example, a guard film or tape for glass, board of plastic or metal, or lens), a steel wire coating material, a clean room curtain, wall papers, mats, flooring materials, bags in flexible containers, a containers, shoes, a battery separator, a water-permeable film, an anti-fouling film, an anti-dust film, a film substituting PVC, tubes or bottles for various cosmetics, detergent, shampoo, rinse etc.

The molded articles or aforementioned multi-layer articles of the resin composition of the present invention can be used by forming adhesive layer on its one side or both sides. As such an adhesive layer, a layer of rubber type, acrylic polymer type or silicone type adhesive can be cited. Further the molded articles or aforementioned laminates of the resin composition of the present invention can be used by laminating on various kinds of substrates such as a biaxial oriented film or sheet of polyethylene terephthalate, polyamide or polypropylene; and materials including board-shaped articles of an acrylic resin, polycarbonate, a styrene polymer such as ABS or polystyrene, polyacetal etc. for utilizing its anti-static properties and other properties. When the molded articles or aforementioned multi-layer articles are used as surface materials, they can be laminated on a substrate mentioned above directly or through an adhesive layer.

## Claims

1. A resin composition consisting of 5 to 50 parts by weight of a potassium ionomer (A) of an ethylene-unsaturated carboxylic acid copolymer, 0.5 to 20 parts by weight of a copolymer consisting of ethylene and acrylic or methacrylic acid ester (B) and 94.5 to 30 parts by weight of a polyolefin resin (C) which is a homopolymer of ethylene or a copolymer of ethylene with α-olefin having 3 to 12 carbon atoms which homopolymer or copolymer has a density of 935 kg/m³ or more, and optionally one or more additives selected from antioxidants, light stabilizers, ultraviolet absorbers, pigments, dye stuffs, lubricants, anti-blocking agents, inorganic fillers, foaming agents, foaming promotors and crosslinking agents.

2. The resin composition according to claim 1, wherein the potassium ionomer (A) comprises a potassium ionomer of two or more types of ethylene-unsaturated carboxylic acid copolymers which has an average acid content of 10 to 30% by weight, has difference in acid contents between the highest content and the lowest content of 2% by weight or more, and has a neutralization degree by potassium of 60% or more.

3. The resin composition according to claim 1 or 2, wherein the copolymer consisting of ethylene and acrylic or methacrylic acid ester is an ethylene-methyl acrylate copolymer or an ethylene-ethyl acrylate copolymer.

4. A single layer article comprises the resin composition described in any one of claims 1 to 3.

5. A multi-layer article having two or more layers, wherein at least one layer comprises the resin composition of any one of claims 1 to 3.

6. A multi-layer article according to claim 5 having a layer comprising a thermoplastic resin (D) other than the resin composition of any one of claims 1 to 3.

7. A multi-layer article according to claim 6, wherein the thermoplastic resin (D) is an olefin polymer.

8. A multi-layer article according to any one of claims 5 to 7 in the form of a film, sheet, bag or blow molded container.

9. A single layer article according to claim 4 in the form of a film, sheet, bag or blow molded container.

## Patentansprüche

1. Harzzusammensetzung, bestehend aus 5 bis 50 Gewichtsanteile eines Kaliumionomers (A) eines Ethylen-ungesättigten Carbonsäurecopolymers, 0,5 bis 20 Gewichtsanteile eines Copolymers, bestehend aus Ethylen und Acryl- oder Methacrylsäureester (B), und 94,5 bis 30 Gewichtsanteile eines Polyolefinharzes (C), das ein Homopolymer aus Ethylen oder ein Copolymer aus Ethylen mit α-Olefin mit 3 bis 12 Kohlenstoffatomen ist, wobei das Homopolymer oder das Copolymer eine Dichte von 935 kg/m³ oder mehr aufweist, und gegebenenfalls einem oder mehreren Additiven ausgewählt aus Antioxidantien, Lichtstabilisatoren, Ultraviolettabsorbern, Pigmenten, Farbstoffen, Schmiermitteln, Anti-Blockmitteln, anorganischen Füllstoffen, Schaummitteln, Schaumpromotoren und Vernetzungsmitteln.

2. Harzzusammensetzung nach Anspruch 1, wobei das Kaliumionomer (A) ein Kaliumionomer von zwei oder mehreren Typen an Ethylen-ungesättigten Carbonsäurecopolymeren, das einen durchschnittlichen Säuregehalt von 10 bis 30 Gew.-% aufweist, das einen Unterschied der Säuregehalte zwischen dem höchsten Gehalt und dem niedrigsten Gehalt von 2 Gew.-% oder mehr aufweist, und das einen Neutralisationsgrad durch Kalium von 60% oder mehr aufweist, umfasst.

3. Harzzusammensetzung nach Anspruch 1 oder 2, wobei das Copolymer, bestehend aus Ethylen und Acryl- oder Methacrylsäureester, ein Ethylenmethylacrylatcopolymer oder ein Ethylenethylacrylatcopolymer ist.

4. Einschichtartikel, umfassend die Harzzusammensetzung beschrieben in einem der Ansprüche 1 bis 3.

5. Multischichtartikel mit zwei oder mehreren Schichten, wobei mindestens eine Schicht die Harzzusammensetzung nach einem der Ansprüche 1 bis 3 umfasst.

6. Multischichtartikel nach Anspruch 5 mit einer Schicht, umfassend ein anderes thermoplastisches Harz (D) als das der Harzzusammensetzung nach einem der Ansprüche 1 bis 3.

7. Multischichtartikel nach Anspruch 6, wobei das thermoplastische Harz (D) ein Olefinpolymer ist.

8. Multischichtartikel nach einem der Ansprüche 5 bis 7 in der Form eines Films, eines Blattes, einer Tasche oder eines blasgeformten Containers.

9. Einschichtartikel nach Anspruch 4 in der Form eines Films, eines Blattes, einer Tasche oder eines blasgeformten Containers.

## Revendications

1. Composition de résine constituée de 5 à 50 parties en poids d'un ionomère au potassium (A) d'un copolymère d'éthylène et d'acide carboxylique insaturé, de 0,5 à 20 parties en poids d'un copolymère (B) d'éthylène et d'ester d'acide acrylique ou méthacrylique, et de 94,5 à 30 parties en poids d'une résine de polyoléfine (C) qui est un homopolymère d'éthylène ou un copolymère d'éthylène et d'α-oléfine comportant de 3 à 12 atomes de carbone, lequel homopolymère ou copolymère présente une masse volumique de 935 kg/m³ ou plus, et en option, d'un ou plusieurs adjuvant(s) choisi(s) parmi les anti-oxydants, photo-stabilisants, absorbeurs UV, pigments, colorants, lubrifiants, agents anti-adhérence de contact, charges inorganiques, agents moussants, promoteurs de moussage et agents de réticulation.

2. Composition de résine conforme à la revendication 1, dans laquelle le ionomère au potassium (A) comprend un ionomère au potassium de copolymères d'éthylène et d'acide carboxylique insaturé de deux types ou plus, lequel ionomère présente une teneur moyenne en acide de 10 à 30 % en poids, la différence entre les teneurs en acide la plus haute et la plus basse valant au moins 2 % en poids, et présente un degré de neutralisation par le potassium de 60 % ou plus.

3. Composition de résine conforme à la revendication 1 ou 2, dans laquelle le copolymère d'éthylène et d'ester d'acide acrylique ou méthacrylique est un copolymère d'éthylène et d'acrylate de méthyle ou un copolymère d'éthylène et d'acrylate d'éthyle.

4. Article monocouche comprenant une composition de résine conforme à l'une des revendications 1 à 3.

5. Article multicouche comportant deux couches ou plus, dont au moins une couche comprend une composition de résine conforme à l'une des revendications 1 à 3.

6. Article multicouche conforme à la revendication 5, comportant une couche qui comprend une résine thermoplastique (D) autre qu'une composition de résine conforme à l'une des revendications 1 à 3.

7. Article multicouche conforme à la revendication 6, dans lequel la résine thermoplastique (D) est un polymère d'oléfine(s).

8. Article multicouche conforme à l'une des revendications 5 à 7, se présentant sous forme de film, de feuille, de sac, ou de récipient moulé par soufflage.

9. Article monocouche conforme à la revendication 4, se présentant sous forme de film, de feuille, de sac, ou de récipient moulé par soufflage.
